# EUROPÄISCHE PATENTSCHRIFT

(11) **EP 2 360 066 B1**
(45) Veröffentlichungstag und Bekanntmachung des Hinweises auf die Patenterteilung: **03.04.2013**
(21) Anmeldenummer: 11153151.3
(22) Anmeldetag: 03.02.2011
(51) Int. Cl.: B60R 21/18

(54) **Rückhaltesystem mit Gurtstraffer und Airbag**
Retention system with belt tensioner and airbag
Système de retenue doté d'un dispositif de serrage de ceinture et d'un airbag

(30) Priorität: 19.02.2010 DE 102010008704
(43) Veröffentlichungstag der Anmeldung: 24.08.2011
(73) Patentinhaber: Schroth Safety Products GmbH, 59757 Arnsberg (DE)
(72) Erfinder: Rathmann-Ramlow, Thomas, 59469, Ense (DE); Grüne, Ulf, 59469, Ense-Hünningen (DE)
(74) Vertreter: Griepenstroh, Jörg

(56) Entgegenhaltungen:
- EP-A1- 1 568 537
- US-A- 3 866 940
- US-A- 3 888 503
- US-A- 3 933 370
- US-A- 5 393 091
- US-A- 5 829 841

## Beschreibung

Die Erfindung betrifft ein Rückhaltesystem für Insassen eines Fahrzeugs gemäß den Merkmalen im Oberbegriff von Patentanspruch 1,

Um die Insassensicherheit in Land-, Luft- und Seefahrzeugen zu gewährleisten, werden jeweils geeignete Rückhaltesysteme angeordnet. Zur Reduzierung von Unfallfolgen kommt hierfür eine Kombination aus Airbag und Sicherheitsgurt sowie den Gurt straffenden Mitteln zum Einsatz. Während der in Folge eines Unfalls gestraffte Sicherheitsgurt den Fahrzeuginsassen weitestgehend auf seinem Sitz fixiert, bremst der aufgeblasene Airbag den beschleunigten Körper des Insassen zumindest bereichsweise verlangsamt ab. Durch die Gesamtheit der Vorrichtungen werden die im Falle einer Unfallsituation hervorgerufenen Verzögerungskräfte auf die Fahrzeuginsassen deutlich begrenzt. In der Folge werden unfallbedingte Verletzungen reduziert oder gar verhindert.

Während bei einem Aufprall des Fahrzeugs die Beschleunigung des Rumpfes durch den gestrafften Sicherheitsgurt gebremst wird, werden die Extremitäten und vor allem der Kopf zunächst ungebremst beschleunigt und ausgelenkt. Zur Reduzierung der Auslenkung des Kopfes sowie zur Aufpralldämpfung werden in geschlossenen Fahrzeugen Kopfairbags eingesetzt, die im Tür-, Säulen- oder Dachbereich untergebracht sind. Um den Airbag bereits in seiner Ursprungslage möglichst nah an die zu schützenden Körperbereiche des Fahrzeuginsassen zu bringen, sind Systeme vorbekannt, welche den Airbag an dem Sicherheitsgurt anordnen.

Die US 5 829 841 A offenbart ein Rückhaltesystem nach dem Oberbegriff von Anspruch 1 für Insassen eines Fahrzeugs, welches einen Gurt und ein Mittel zur Gurtstraffung sowie einen an dem Gurt angeordneten Airbag aufweist. Mindestens ein Teiibereich des Gurts ist bei Auslösung des Mittels zur Gurtstraffung zumindest zeitweise gespannt, wobei der Airbag das Mittel zur Gurtstraffung ist. Weiterhin sind zwei Führungen vorgesehen, wobei eine der Führungen zwischen in Längsrichtung des Gurts gelegenen Endbereichen des Airbags angeordnet ist, während die andere Führung zumindest teilweise um den gefalteten Airbag herum verläuft. Die zwischen den Endbereichen des Gurts angeordnete Führung besitzt an ihrem freien Ende eine gekrümmte Ausgestaltung, welche mit einer Kontur korrespondiert, so dass die Führung eine wiederverschließbare Verbindung aufweist, welche zur Installation des Rückhaltesystems an bereits bestehenden Gurtsystemen von Fahrzeugen mechanisch geöffnet werden kann.

Aus der US 3 888 503 A geht ein Rückhaltesystem für Insassen eines Fahrzeugs hervor, welches einen Gurt und ein Mittel zur Gurtstraffung sowie einen Airbag aufweist. Hierfür ist der Gurt selbst rohrförmig ausgebildet, wobei er über seine gesamte Länge hinweg in einer bestimmten Art zu einer gurtähnlichen Form zusammengefaltet ist. In diesem Zustand weist der Gurt einzelne Bereiche auf, welche eine derartige Verbindung des gefalteten Gurtes aufweisen, die keine Expansion und somit kein Auseinanderfalten des Gurtes zulassen. Weiterhin sind zwischen diesen Bereichen gelegene Teile mit lösbaren Nähten versehen, um zu einem Airbag expandiert zu werden.

Die EP 1 568 537 A1 zeigt einen Gurt und ein Mittel zur Gurtstraffung sowie ein an dem Gurt angeordneten Airbag. Der Airbag dient als Mittel zur Gurtstraffung. Beim Auslösen des Mittels zur Gurtstraffung ist mindestens ein Teilbereich des Gurts zeitweise gespannt. Weiterhin kann der Airbag den Gurt zumindest bereichsweise U-förmig umgreifen.

Der Erfindung liegt die Aufgabe zugrunde, ein wie zuvor beschriebenes kompakt aufgebautes und leicht nachrüstbares Rückhaltesystem mit einem Gurt, einem Gurtstraffer und einem an dem Gurt angeordneten Airbag dahingehend zu verbessern, dass die bei einem Aufprall mit Auslösung des Airbags entstehenden Belastungen sowohl auf den Insassen als auch auf den Airbag selbst reduziert sind.

Die Lösung dieser Aufgabe besteht nach der Erfindung in einem Rückhaltesystem mit einem Gurt, einem Mittel zur Gurtstraffung und einem Airbag gemäß den Merkmalen von Patentanspruch 1.

Das so gestaltete Rückhaltesystem für Insassen eines Fahrzeugs, beispielsweise eines Land-, Wasser- oder Luftfahrzeugs weist einen Gurt und einen an dem Gurt angeordneten Airbag als Mittel zur Gurtstraffung auf. Mindestens ein Teilbereich des Gurts ist bei Auslösung des Mittels zur Gurtstraffung zumindest zeitweise gespannt. Erfindungsgemäß weist das Rückhaltesystem mindestens eine Drosselschlaufe auf, die zumindest teilweise um den gefalteten Airbag herum und zwischen seinen in Längsrichtung des Gurts gelegenen Endbereichen angeordnet ist.. Der Airbag ist in seinem expandierten Zustand von der Drosselschlaufe eingeschnürt, wobei die Einschnürung ist im expandierten Zustand des Airbags lösbar ist. Bei einer Überschreitung eines bestimmten Innendrucks des Airbags löst sich die Drosselschlaufe. Die Einschnürung wird aufgehoben. Dann handelt es sich um ein zweistufiges System:

Durch die Lösung der Einschnürung wird der Airbag vor zu hoher Belastung durch den Insassen geschützt. Die hohe Belastung entsteht durch das Abbremsen des Insassen.

Darüber hinaus erfährt der Körper des Insassen eine zweistufige Verzögerung durch die Aufhebung der Einschnürung, da sich der Gurt in seiner gestrafften Lage wieder etwas entspannt und der Airbag sein Volumen und Druck ändert sowie anders verteilt.

Durch die Zusammenlegung des Airbags und des Mittels zur Gurtstraffung zu einer Funktionseinheit entsteht ein überaus kompaktes Rückhaltesystem, das problemlos in bereits bestehende Fahrzeuge mit Gurtansatzpunkten integriert werden kann. Der besondere Vorteil liegt dann in einem einfachen Austausch bereits bestehender Gurtsysteme. Fahrzeuge, die äußerst gewichtssparend und daher überwiegend funktional aufgebaut sind, wie beispielsweise Luftfahrzeuge, erhalten durch den Einsatz des vorgestellten Systems ein leichtbauendes und mit nur geringen Eingriffen in die bestehende Architektur des Innenraums integrierbares Rückhaltesystems, welches ein hohes Maß an Sicherheit bei gleichzeitig kompakter Bauweise bietet.

Die Drosselschlaufe fixiert den gefalteten Airbag in seiner Lage. Überdies wird der Airbag durch die Drosselschlaufe vor einer ungewollten Entfaltung geschützt. Die Drosselschlaufe ist in ihrer um den Airbag herum angeordneten Lage schmaler als der Airbag in Längsrichtung des Gurts lang ist. Die Drosselschlaufe bedeckt nur einen kleinen Teil des Airbags.

Durch die Drosselschlaufe kann das Aufblasverhalten des Airbags gesteuert werden. Je enger die Drosselschlaufe an dem Airbag anliegt, umso geringer ist der verbleibende Querschnitt für ein Durchströmen eines den Airbag expandierenden Gases. Die Lage der Drosselschlaufe beeinflusst die Expansion des Airbags. Ein Bereich des Airbags, der in Richtung des strömenden Gases vor der Drosselschlaufe liegt, expandiert schneller, während ein Bereich des Airbags hinter der Drosselschlaufe dem vorderen Bereich gegenüber langsamer expandiert.

Der Airbag ist mindestens über seine in Längsrichtung des Gurts gelegenen Endbereiche mit dem Gurt verbunden. In Kombination mit der Drosselschlaufe ist der Airbag somit an mindestens drei Punkten in seiner Lage gegenüber dem Gurt fixiert. Im gefalteten Zustand ist der Airbag über eine geeignete Abdeckung bedeckt. Der gefaltete Airbag ist über die Abdeckung vor dem Eindringen von Fremdkörpern geschützt. Die Abdeckung schützt den Airbag vor möglichen Schäden durch Einwirkungen von außen, die beispielsweise eine Perforation des Airbags bewirken könnten.

Über die mit dem Sicherheitsgurt verbundenen Endbereiche des Airbags und die zwischen den Endbereichen gelegene Drosselschlaufe wird die Entfaltung des Airbags begrenzt. Durch die Einschnürung des Airbags erfolgt eine Verkürzung des Gurtes zwischen den Endbereichen des Airbags, wodurch der Gurt in diesem Bereich gestrafft wird.

Die Drosselschlaufe ist zumindest teilweise um den Gurt herum angeordnet ist. In Form einer geschlossenen Schlaufe kann die Drosselschlaufe somit in ihrer Lage an dem Gurt und somit auch gegenüber dem Airbag entlang des Gurts verschoben werden. Durch die Lageveränderung kann die bestmögliche Einstellung gewählt werden. Eine individuelle Fixierung der Drosselschlaufe ist überall zwischen den Endbereichen möglich.

Bevorzugt ist vorgesehen, dass die Drosselschlaufe in einem Schulterbereich des Insassen an dem Rückhaltesystem angeordnet ist. Bei dem Rückhaltesystem handelt es sich insbesondere um einen Harness. Hier erfüllt die Drosselschlaufe die Aufgabe, dass der Bereich zwischen den Endbereichen des Airbags durch die Krümmung des expandierten Airbags verkürzt wird. Darüber hinaus ist die Lage der Drosselschlaufe so gewählt, dass der durch die Drosselschlaufe teilweise eingeschnürte größere Volumenanteil des expandierten Airbags vor dem Gesicht des Insassen liegt. Bei einem Crash ist somit der in Fahrtrichtung ausgelenkte Kopf besonders geschützt.

In einer bevorzugten Ausgestaltung ist der Airbag so angeordnet, dass er den Gurt zumindest bereichsweise U-förmig umgreift. Auf diese Weise liegt ein Teil des Airbags zwischen einem Schulterbereich des Insassen und dem Gurt. Im Crashfall sorgt der expandierte Airbag somit für ein leichtes Abheben des Airbags von der Schulter des Insassen, wodurch sich eine straffende Wirkung des Gurts auf den Körper des Insassen ergibt.

Hierbei ist vorgesehen, dass der Airbag an einem im Schulterbereich des Insassen liegenden Teil des Gurts angeordnet ist und die U-förmige Umgreifung des Airbags zur Körpermitte des Insassen hin geschlossen ist. Somit liegt der Airbag um den Gurt herum und schirmt diesen bereichsweise von dem Körper des Insassen ab, um die einschneidende Wirkung des Gurts möglichst weit zu reduzieren.

In einer bevorzugten Ausgestaltung ist der Airbag zu einem Drittel seines expandierten Volumens zwischen dem Insassen und dem Gurt angeordnet. Auf diese Weise wird ein geeignetes Verhältnis von Gurtstraffung und Schutz des Kopfbereichs des Insassen erreicht.

Für eine besonders kompakte Bauform weist der Airbag selbst einen Gasgenerator auf. Dieser kann auch am Gurt angeordnet sein. Hierdurch entfällt eine aufwändig zu verlegende Zuführung des notwendigen Gasdrucks für die Expansion des Airbags. Der in der Airbageinheit integrierte Gasgenerator steht in Verbindung mit einer einen Unfall detektierenden Sensorik. Auch eine Anbringung des Gasgenerators am Fahrzeug ist denkbar, wobei der Gasgenerator dann über eine gasführende Leitung mit dem Airbag verbunden ist. Durch das Auslösen der Sensorik wird der Gasgenerator aktiviert, wodurch das Gas über die entsprechend gasführende Verbindung in den Airbag geleitet wird. Die notwendige Sensorik ist hierfür über eine Signalleitung mit dem Gasgenerator verbunden. Grundsätzlich sind aber auch andere Übertragungsmöglichkeiten analog der Signalleitung denkbar, beispielsweise optische oder Funkverbindungen. Generell kann für eine besonders kompakte Bauform die entsprechende Sensorik auch direkt in die Airbageinheit integriert sein.

Mit dem vorgestellten System sind Sitzplätze in Fahrzeugen zur Personenbeförderung ausrüstbar, wie beispielsweise in Bussen, Bahnen und Flugzeugen. Sofern bereits Gurte vorhanden sind, können diese auf einfache Weise nachgerüstet werden. Insbesondere der Schutz von Insassen eines Fluggeräts, beispielsweise der Piloten, ist hierdurch auf eine einfache und wirkungsvolle Weise realisierbar.

Die Erfindung wird nachfolgend anhand von in den Figuren schematisch dargestellten Ausführungsbeispielen näher erläutert. Es zeigen:
- Figur 1: Einen Gurt und einen daran angeordneten Airbag als Ausschnitt eines erfindungsgemäßen Rückhaltesystems;
- Figur 2: eine Variante des Rückhaltesystems aus Figur 1 im unausgelösten Zustand in geschnittener Darstellungsweise sowie
- Figur 3: das Rückhaltesystem aus Figur 2 in selber Darstellungsweise im ausgelösten Zustand.

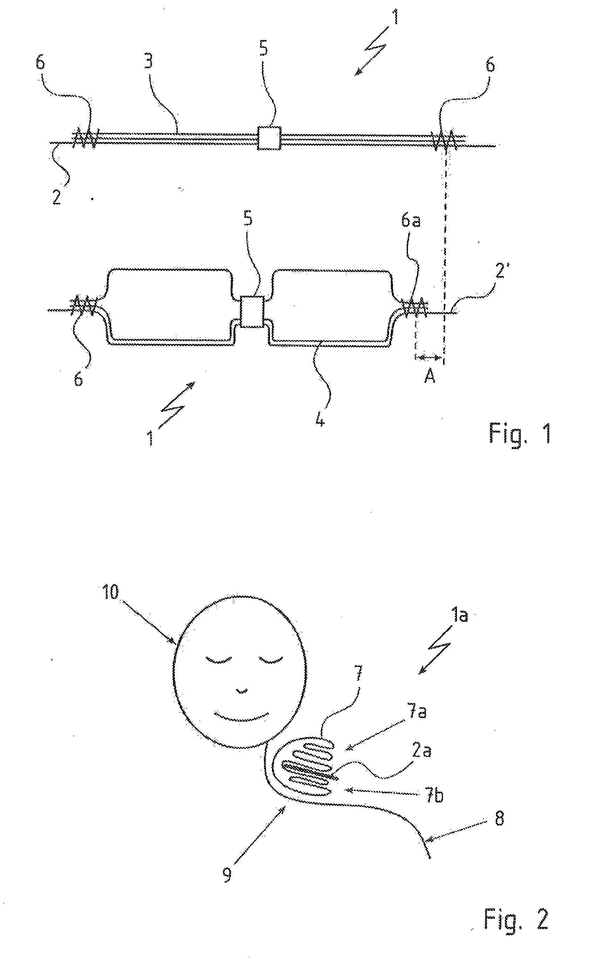

Figur 1 zeigt ein erfindungsgemäßes Rückhaltesystem 1 sowohl im unausgelösten als auch ausgelösten Zustand. Das Rückhaltesystem 1 umfasst einen nur im Ausschnitt dargestellten Gurt 2, an welchem ein unausgelöster, insbesondere gefalteter Airbag 3 angeordnet ist. Weiterhin ist der ausgelöste Zustand des Airbags 3 an einem Gurt 2' dargestellt, welcher als expandierter Airbag 4 ein gegenüber dem unausgelösten Airbag 3 deutlich größeres Volumen aufweist.

Das Rückhaltesystem 1 weist eine Drosselschlaufe 5 auf, welche mittig zwischen zwei Endbereichen 6 des Airbags 3, 4 angeordnet ist. In der Darstellung ist die Drosselschlaufe 5 um einen Teilbereich des Airbags 3, 4 und des Gurts 2, 2' herum angeordnet. Insbesondere im expandierten Zustand des Airbags 4 wird dieser durch die Drosselschlaufe 5 eingeschnürt, wodurch seine bereits zu den Endbereichen 6 hin im expandierten Zustand erfolgte Krümmung durch eine im Bereich der Einschnürung um die Drosselschlaufe 5 herum erfolgende zusätzliche Krümmung erweitert wird.

Im Ergebnis wird der Gurt 2' zwischen den Endbereichen 6 des expandierten Airbags 4 mehrfach umgelenkt, so dass sich eine Verkürzung des Gurts 2' einstellt, welche in der Darstellung von Figur 1 zwischen den Endbereichen 6 erfolgt, wobei ein Endbereich 6a in einem Abstand A von seiner vorherigen Lage durch die Verkürzung des Gurts 2' verlagert wird. Durch den expandierten Airbag 4 kommt es zu einer Verkürzung des Gurts 2', wodurch dieser insgesamt gestrafft wird.

Figur 2 stellt eine Variante des Rückhaltesystems 1 in Form eines Rückhaltesystems 1a dar. Das Rückhaltesystem 1a umfasst einen in üblicher Weise angelegten Gurt 2a, welcher einen gefalteten, insbesondere unausgelösten Airbag 7 aufweist. Der Gurt 2a verläuft dabei in einem Schulterbereich 9 eines Insassen 8, wobei auch der Airbag 7 im Schulterbereich 9 des Insassen 8 angeordnet ist. Durch die Anordnung des Airbags 7 im Schulterbereich 9 des Insassen 8 ist insbesondere dessen Kopf 10 bei einer möglichen Auslösung des Airbags 7 geschützt.

Der Airbag 7 ist derart gefaltet, dass er den Gurt 2a U-förmig umgreift, wobei die U-förmige Umgreifung des Airbags 7 zur Körpermitte des Insassen 8 hin geschlossen ist. Weiterhin ist der gefaltete Airbag 7 so angeordnet, dass dieser sich durch die U-förmige Umgreifung des Gurts 2a in einen oben zwischen dem Gurt 2a und dem Kopf 10 des Insassen 8 angeordneten Airbag 7a und einen zwischen dem Gurt 2a und dem Schulterbereich 9 des Insassen 8 angeordneten Airbag 7b unterteilt. Bereits hier ist zu erkennen, dass der oben gelegene Airbag 7a gegenüber dem unten gelegenen Airbag 7b größer ist.

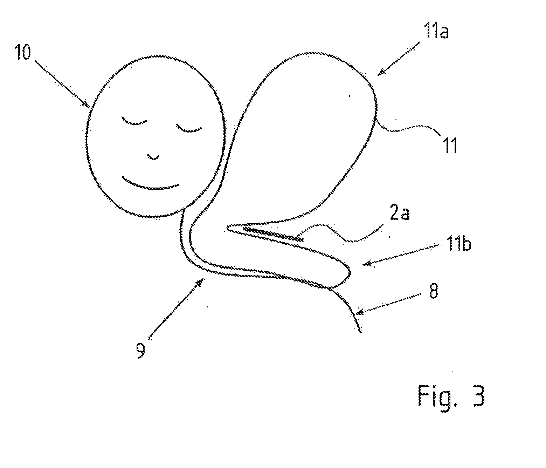

Figur 3 zeigt das in Figur 1 dargestellte Rückhaltesystem 1a im ausgelösten Zustand. Der noch in Figur 2 gefaltete Airbag 7 ist hier in Form eines ausgelösten und somit expandierten Airbags 11 dargestellt. Durch die U-förmige Umgreifung des Airbags 11 um den Gurt 2a herum wird dieser auch im expandierten Zustand in einen oberhalb des Gurts 2a gelegenen expandierten Airbag 11 a und einen zwischen dem Gurt 2a und dem Schulterbereich 9 des Insassen 8 unten gelegenen expandierten Airbag 11b unterteilt. Das Gesamtvolumen des Airbags 11 ist dabei so aufgeteilt, dass der untere Airbag 11 b ungefähr ein Drittel des Volumens einnimmt, während der obere Airbag 11a zwei Drittel des gesamten expandierten Airbags 11 umfasst.

Insbesondere durch den unten angeordneten Airbag 11b wird der Gurt 2a von dem Schulterbereich 9 des Insassen 8 im ausgelösten, insbesondere expandierten Zustand beabstandet. Durch die U-förmige Umgreifung des Airbags 11 ist auch der sich an den Schulterbereich 9 des Insassen 8 zum Kopf 10 hin anschließende Halsbereich vor der zumeist einschneidenden Wirkung des Gurts 2a geschützt.

Der oben angeordnete Teil des Airbags 11a ist dabei im Bereich des Kopfes 10 des Insassen 8 vollständig expandiert, so dass dessen Kopf 10 geschützt ist. Durch das Abheben des Gurtes 2a von dem Schulterbereich 9 des Insassen 8 wird der Gurt 2a zusätzlich gestrafft, wodurch der Insasse 8 erhöhte Rückhaltekräfte erfährt.

### Bezugszeichen

- 1 -: Rückhaltesystem
- 1 a -: Rückhaltesystem
- 2 -: Gurt
- 2' -: Gurt, verkürzt
- 2a -: Gurt
- 3 -: Airbag, gefaltet
- 4 -: Airbag, expandiert
- 5 -: Drosselschlaufe
- 6 -: Endbereich
- 6a -: Endbereich
- 7 -: Airbag, gefaltet
- 7a -: Airbag, gefaltet, oben
- 7b -: Airbag, gefaltet, unten
- 8 -: Insasse
- 9 -: Schulterbereich
- 10 -: Kopf von 8
- 11 -: Airbag, expandiert
- 11a -: Airbag, expandiert, oben
- 11b -: Airbag, expandiert, unten

- A -: Abstand

## Patentansprüche

1. Rückhaltesystem für Insassen (8) eines Fahrzeugs, welches einen Gurt (2, 2', 2a) einen an dem Gurt (2, 2', 2a) angeordneten Airbag (3, 4, 7, 11) als ein Mittel zur Gurtstraffung aufweist, wobei mindestens ein Teilbereich des Gurts (2, 2', 2a) bei Auslösung des Mittels zur Gurtstraffung zumindest zeitweise gespannt ist, **dadurch gekennzeichnet, dass** das Rückhaltesystem (1, 1a) mindestens eine Drosselschlaufe (5) aufweist, die zumindest teilweise um den gefalteten Airbag (3, 7) herum und zwischen seinen in Längsrichtung des Gurts (2, 2', 2a) gelegenen Endbereichen (6, 6a) angeordnet ist, wobei der Airbag (4, 11) in seinem expandierten Zustand von der Drosselschlaufe (5) eingeschnürt ist und die Einschnürung im expandierten Zustand des Airbags (4, 11) bei einer Überschreitung eines bestimmten Innendrucks durch Reißen der Drosselschlaufe (5) lösbar ist.

2. Rückhaltesystem nach Anspruch 1, **dadurch gekennzeichnet, dass** der Airbag (3, 4, 7, 11) mindestens über seine in Längsrichtung des Gurts (2, 2', 2a) gelegenen Endbereiche (6, 6a) mit dem Gurt (2, 2', 2a) verbunden ist.

3. Rückhaltesystem nach Anspruch 1 oder 2, **dadurch gekennzeichnet, dass** die Drosselschlaufe (5) zumindest teilweise um den Gurt (2, 2', 2a) herum angeordnet ist.

4. Rückhaltesystem nach einem der Ansprüche 1 bis 3, **dadurch gekennzeichnet, dass** die Drosselschlaufe (5) in einem Schulterbereich (9) des Insassen (8) an dem Rückhaltesystem (1, 1a) angeordnet ist.

5. Rückhaltesystem nach einem der Ansprüche 1 bis 4, **dadurch gekennzeichnet, dass** der Airbag (7, 11) den Gurt (2a) zumindest bereichsweise U-förmig umgreift.

6. Rückhaltesystem nach Anspruch 5, **dadurch gekennzeichnet, dass** der Airbag (7, 11) an einem im Schulterbereich (9) des Insassen (8) liegenden Teil des Gurts (2a) angeordnet ist und die U-förmige Umgreifung des Airbags (7, 11) zur Körpermitte des Insassen (8) hin geschlossen ist.

7. Rückhaltesystem nach einem der Ansprüche 1 bis 6, **dadurch gekennzeichnet, dass** der Airbag (11) zu einem Drittel seines expandierten Volumens zwischen dem Insassen (8) und dem Gurt (2a) angeordnet ist.

## Claims

1. Retention system for occupants (8) of a vehicle, which comprises a belt (2, 2', 2a) and an airbag (3, 4, 7, 11) arranged on the belt (2, 2', 2a) as a belt-tensioning means, wherein at least a sub-region of the belt (2, 2', 2a) is at least temporarily tensioned when the belt-tensioning means is triggered, **characterised in that** the retention system (1, 1 a) comprises at least one throttle loop (5) which is arranged at least partially around the folded airbag (3, 7) and between the two end regions (6, 6a) thereof as seen in the longitudinal direction of the belt (2, 2', 2a), wherein the airbag (4, 11) in its expanded state is constricted by the throttle loop (5) and the constriction in the expanded state of the airbag (4, 11) can be released by a tearing of the throttle loop (5) when a given internal pressure is exceeded.

2. Retention system according to claim 1, **characterised in that** the airbag (3, 4, 7, 11) is connected to the belt (2, 2', 2a) at least via its two end regions (6, 6a) as seen in the longitudinal direction of the belt (2, 2' 2a).

3. Retention system according to claim 1 or 2, **characterised in that** the throttle loop (5) is arranged at least partially around the belt (2, 2', 2a).

4. Retention system according to one of claims 1 to 3, **characterised in that** the throttle loop (5) is arranged on the retention system (1, 1a) in a shoulder region (9) of the occupant (8).

5. Retention system according to one of claims 1 to 4, **characterised in that** the airbag (7, 11) engages in a U-shaped manner around the belt (2a) at least in one region.

6. Retention system according to claim 5, **characterised in that** the airbag (7, 11) is arranged on a portion of the belt (2a) that is located in the shoulder region (9) of the occupant (8), and the U-shaped engagement of the airbag (7, 11) is closed towards the centre of the body of the occupant (8).

7. Retention system according to one of claims 1 to 6, **characterised in that** one-third of the expanded volume of the airbag (11) is located between the occupant (8) and the belt (2a).

## Revendications

1. Système de retenue pour des occupants (8) d'un véhicule automobile, qui comprend une ceinture (2, 2', 2a) et un airbag (3, 4, 7, 11) agencé sur la ceinture (2, 2', 2a) à titre de moyen pour tendre la ceinture, dans lequel au moins une zone partielle de la ceinture (2, 2', 2a) est au moins temporairement tendue lors du déclenchement du moyen pour tendre la ceinture,
**caractérisé en ce que** le système de retenue (1, 1a) comprend au moins une boucle d'étranglement (5) qui est agencée au moins partiellement tout autour de l'airbag replié (3, 7) et entre ses zones terminales (6, 6a) longitudinales de la ceinture (2, 2', 2a), dans lequel l'airbag (4, 11) est enserré, dans son état en expansion, par la boucle d'étranglement (5) et, dans l'état en expansion de l'airbag (4, 11) le rétrécissement est susceptible d'être défait par déchirure de la boucle d'étranglement (5) lors d'un dépassement d'une certaine pression intérieure.

2. Système de retenue selon la revendication 1, **caractérisé en ce que** l'airbag (3, 4, 7, 11) est relié à la ceinture (2, 2', 2a) au moins via ses zones terminales (6, 6a) longitudinales de la ceinture (2, 2', 2a).

3. Système de retenue selon la revendication 1 ou 2, **caractérisé en ce que** la boucle d'étranglement (5) est agencée au moins partiellement tout autour de la ceinture (2, 2', 2a).

4. Système de retenue selon l'une des revendications 1 à 3, **caractérisé en ce que** la boucle d'étranglement (5) est agencée sur le système de retenue (1, la) dans une zone (9) correspondant aux épaules de l'occupant (8).

5. Système de retenue selon l'une des revendications 1 à 4, **caractérisé en ce que** l'airbag (7, 11) entoure la ceinture (2a) en forme de U, au moins par zone.

6. Système de retenue selon la revendication 5, **caractérisé en ce que** l'airbag (7, 11) est agencé sur une partie de la ceinture (2a) située dans une zone (9) correspondant aux épaules de l'occupant (8), et la forme en U de l'airbag (7, 11) qui entoure la ceinture est refermée du côté du milieu du corps de l'occupant (8).

7. Système de retenue selon l'une des revendications 1 à 6, **caractérisé en ce que** l'airbag (11) est agencé, pour un tiers de son volume en expansion, entre l'occupant (8) et la ceinture (2a).
